(19) Europäisches Patentamt
European Patent Office
Office européen des brevets

(11) Publication number: **0 379 246 B1**

(12) **EUROPEAN PATENT SPECIFICATION**

(45) Date of publication of patent specification: **17.08.94**

(51) Int. Cl.5: **C09D 175/04**, C08G 18/08, C08G 18/75, C08G 18/78, C08G 18/65, C08G 18/16, //(C08G18/08,101:00)

(21) Application number: **90200080.1**

(22) Date of filing: **12.01.90**

(54) **A method for preparing and applying a sprayable, light stable polyurethane.**

(30) Priority: **20.01.89 BE 8900067**

(43) Date of publication of application:
**25.07.90 Bulletin 90/30**

(45) Publication of the grant of the patent:
**17.08.94 Bulletin 94/33**

(84) Designated Contracting States:
**AT BE CH DE DK ES FR GB GR IT LI LU NL SE**

(56) References cited:
**FR-A- 2 450 847**
**US-A- 3 772 218**
**US-A- 4 695 618**
**US-A- 4 748 192**

(73) Proprietor: **RECTICEL**
**De Broquevillelaan 12**
**B-1200 Woluwe-Saint-Pierre (BE)**

(72) Inventor: **Jourquin, Lucien**
**Cooppallaan 156-1**
**B-9200 Wetteren (BE)**
Inventor: **Du Prez, Eddie**
**Molenberg 28**
**B-9660 Brakel (BE)**

(74) Representative: **Callewaert, Jean et al**
**GEVERS Patents,**
**rue de Livourne 7,**
**Boîte Postale 1**
**B-1050 Bruxelles (BE)**

EP 0 379 246 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method for making a light stable polyurethane film comprising the steps of :

- preparing a polyurethane reaction mixture containing an isocyanate compound having at least two NCO-groups which are not directly attached to an aromatic group, and a compound containing active hydrogen with respect to NCO groups, and wherein the latter compound is reacting with isocyanate compound in the presence of a chain extender and/or cross-linker and a catalyst ; and
- spraying said reaction mixture by means of a spray pistol onto a surface so as to form said polyurethane film by at least one pass of the spray pistol over said surface.

In this method, the chain extenders and cross-linkers are also compounds which contain active hydrogen with respect to NCO groups, but these compounds have, however, a relatively low equivalent weight (EW).

A method as defined hereinabove is already disclosed in US-A-4 695 618. In this US patent, the possibility of using aliphatic isocyanates is however only given amongst all kinds of other isocyanates while no example is given wherein use is made of an aliphatic isocyanate. On the contrary, all of the given examples involve the use of aromatic MDI as isocyanate.

Further, in the method according to US-A-4 695 618 no separate film is manufactured but the sprayed film adheres, on the contrary, as a coating onto the surface.

The main object of the present invention is to provide a method for making a light stable polyurethane film wherein use is made of a polyurethane reaction mixture based on an aliphatic or alicyclic isocyanate which can notwithstanding its lower reactivity be sprayed in one single passage or spray process in a sufficiently thick and homogeneous layer onto a surface of an open mould. This reaction mixture has therefore to be relatively viscous and has to gel quickly in order to avoid run-off problems of the material on the mould surface under the influence of the gravity force while its viscosity being still sufficiently low in the initial phase in order to obtain a homogeneous spreading over the mould surface and also to prevent clogging of the spray pistol. More particularly, it is important that a too quick gelation does not occur during the spraying so that a homogeneous thickness would be obtained by a sufficient flow of the reactive mixture in the initial reaction stage, somewhat in an analogous manner as it is the case with a paint. Further, the initial viscosity increase may not be too large a.o. in order to prevent deposits on the spray nozzle outlet, which would change the spray pattern. In this respect, the fibre forming time "FT" should be higher than 3 seconds, and preferably higher than 4 seconds. Finally, in order to guarantee a sufficient productivity as to production cycle time, the gelation ("curing") of the reacting mixture and hence the demoulding time has to be as short as possible.

In order to permit the reaction mixture to be sprayed in a homogeneous thickness of 0,3 to 3 mm per pass of the spray pistol onto an open mould surface and in order to permit the so-obtained polyurethane film to be demoulded after a demoulding time ("DT') of less than 10 minutes, the features defined in the characterizing portion of claim 1 are applied in the method according to the present invention.

In a particular embodiment of the invention, use is made of a catalytic system comprising at least an amine initiator together with a lead, tin or bismuth compound and (a) a zeolite type catalyst formed of an alkaline aluminium silicate with sodium and/or potassium ions, and/or (b) an alkaline catalyst having a pH higher than 10 and consisting of diazobicyclo-alkenes or salts of the latters with weak organic acids or consisting of potassium, sodium or lithium salt of weak organic acids.

In a preferred embodiment of the invention, said reaction mixture is sprayed according to a two component system, wherein one component comprises the isocyanate and all of the additives which are stable with respect to this isocyanate during a sufficient time period and also compatible with the latter and wherein the other component comprises the compounds containing active hydrogen with respect to NCO groups, especially polyols, chain extenders and cross-linkers and additives which are stable with respect to these compounds during a sufficient time period and also compatible with the latter.

Other particularities and advantages of the invention will become apparent from the following description of a series of polyurethane formulations which are obtained by applying the method according to the invention and also of some specific embodiments of the method according to which the thus prepared polyurethane is sprayed.

Generally, the invention relates to a multiple component polyurethane system which can be sprayed on an open mould or on other surfaces by means of a multicomponent spray nozzle in order to form inherent light stable, flexible, semi-flexible, or rigid, microcellular or non cellular films or layers having a density of 500 to 1200 kg/$m^3$.

These multicomponents comprise the following substances :

a) an isocyanate, the NCO groups of which are not directly attached to an aromatic group, such as aliphatic or alicyclic polyisocyanates or derivatives of these ;

b) with respect to the NCO groups active hydrogen containing compounds, especially so-called "basic polyols" containing with respect to NCO groups reactive groups which consist mainly of $CH_2OH$ and/or NH and/or $NH_2$ or mixtures thereof, having a functionality between 2 and 8 and an equivalent weight between 100 and 3500 (within the context of this description, there is arbitrarily meant by "basic polyols"all of the here defined compounds) ;

c) 2 to 300 parts per 100 parts of the "basic polyols", of a chain extender and/or a cross-linker, dependent upon the hardness degree of the foils, having only functional OH groups, at least 50 % of which are primary OH groups, the equivalent weight of which is lower than 100 and the functionality of which varies from 2 to 6 ;

d) a synergic catalytic system comprising at least one compound of each of the next two series :

1. an organic lead, bismuth or tin compound or mixtures thereof ;

2. one or more amine containing initiators, (functionality $\geqq$ 2), which in fact also serve as chain extender and/or as cross-linker and which are either or not combined with an alkaline catalyst or zeolite type catalyst, as will be defined further hereinafter ;

e) 0 to 0.4 % water, present in the active hydrogen containing compounds;

f) possibly low boiling liquids serving as a physical blowing agent and the amount of which is comprised between 0 and 0.04 moles with respect to 100 gr of the active hydrogen containing compounds (b) and (c), the boiling point of these liquids being preferably comprised between 20 and 70 °C.

The cross-linkers have a functionality higher than 2, whilst the chain extenders have a functionality of 2. In both cases, the molecular weight is relatively low.

The suitable isocyanates can be very different.

According to a first embodiment of the invention, use can thus be made of an isocyanate consisting mainly of IPDI monomer and/or mixtures of IPDI monomer with IPDI derivatives, such as trimers, more particularly isocyanurates or biuret, prepolymers and/or carbodiimide/urethidion derivatives and this in such proportions that a NCO value of 15 to 37.8 in percent by weight is obtained.

In a second embodiment, the isocyanate consists of TMXDI or derivatives (except from isocyanurate trimer) : prepolymers, biuret trimer and/or carbodiimide/urethidion derivatives, in such proportions that a NCO value of 15 to 34.4 in percent by weight is obtained.

In a third embodiment, the isocyanate is formed of HDI whether or not in combination with derivatives, such as trimers, prepolymers and/or carbodiimide/urethidion derivatives, as in the first embodiment, taking care that the NCO value is anyway finally situated between 15 to 50.

In a fourth embodiment, the isocyanate is formed of H6XDI and possibly of analogeous combinations as is the case in the first hereabove described embodiment in which the NCO value is comprised between 15 and 43.

A fifth embodiment consists in using H12MDI, possibly in combination with derivatives or consisting of prepolymers and/or carbodiimide/urethidion derivatives, the NCO value being comprised between 15 and 31.8.

Generally, also other aliphatic or alicyclic isocyanates or derivatives thereof can be used provided that the following conditions are simultaneously met :

1) functionality of basic monomer = 2

2) NCO groups not directly attached to aromatic ring.

The types or mixtures defined in the following Table 1 are preferred.

**TABLE 1**

| | Prepolymer (*) (+ monomer) | Isocyanurate (+ monomer) | Biuret (+ monomer) | % NCO preference (of final mixture) |
|---|---|---|---|---|
| IPDI | X | X | X | 20-30 |
| TMXDI | X | - | X | 15-30 |
| HDI | X | X | X | 20-35 |
| H6XDI | X | X | X | 20-35 |
| H12MDI | X | X | X | 15-25 |

(*) Preferably but not exclusively, following reactive components (versus NCO) are used for the prepolymerisation of the here described polyisocyanates :

1) Polyetherpolyols, chain extenders/cross-linkers with only sec. and/or primary OH groups as reactive groups and :
Hydroxylnumber : 15 - 1800
functionality : 2 - 6 (= number of OH groups per molecule).

2) Polyamines (with primary and/or secondary amino groups) with "sufficient" low reactivity versus NCO groups, in order to allow the preparation of stable, homogeneous prepolymer mixtures in the given % NCO range.
A sufficient low (= moderated) reactivity of the polyamines is obtained for polyamine molecules with :
- a sufficient high equivalent weight (= MW/f) or in other words a sufficient high molecular weight (MW) and a sufficient low functionality (f), i.e. for example a functionality of 2 or 3.

The minimum molecular weight, depending on other molecule parameters, will be described further.

- and/or sufficient steric hindrance of the sec. NH groups, through substitution with non reactive groups, such as (1) linear alkyl groups ($C_2$-$C_{10}$) substituted by electronegative groups, such as phenyl, cyano, halogen,... and (2) branched alkyl groups ($C_4$-$C_{10}$).

A more specific description of such preferred polyamines, which can be subdivised in two general chemical classes, is given hereafter :

a) <u>Polyoxypropylene di- and triamines</u>

(e.g. JEFFAMINE® types, produced by TEXACO)

a.1 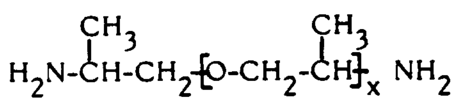

- funct. : 2
- MW : 400-6000 (equiv.weight: 200-3000)

a.2. id. a.1 but sec. NH-R end groups instead of (more reactive) primary $NH_2$ group.

- funct. : 2
- MW : 150-6000 (equiv.weight: 75-3000)
- R is e.g. cyanoethyl or isohexyl group.

a.3.

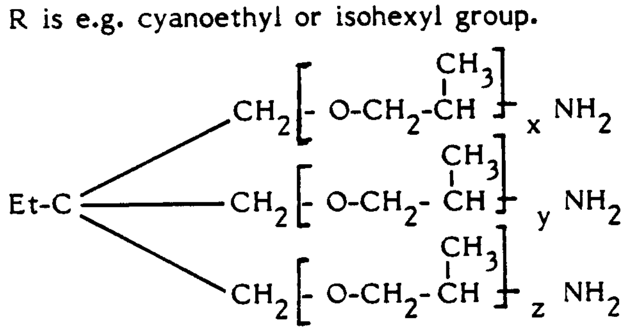

- funct. : 3
- MW : 900-9000 (equiv. weight : 300-3000)

a.4 id. a.3. but sec. NH-R end groups instead of primary $NH_2$ groups.

- funct. : 3
- MW : 300-9000 (equiv. weight : 100-3000)

b) Branched alkyl ($C_4$-$C_{10}$) substituted di- or tri-secondary <u>polyamines in MW range of 170-1000</u>

Hereafter some typical (but not limitative) examples

b1 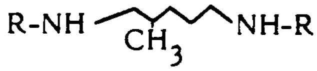 (f:2 - MW:285)

b2 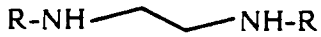 (f2 - MW: 228)

b3 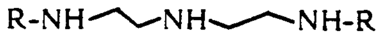 (f:3 MW:271)

b4 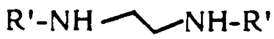 (f:2 MW:256)

b5 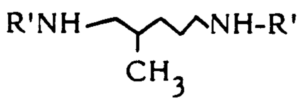 (f:2 - MW:313)

b6 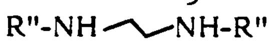 (f:2 - MW: 170)

- R group in examples b1-b3 is isohexyl
- R' group in examples b4-b5 is 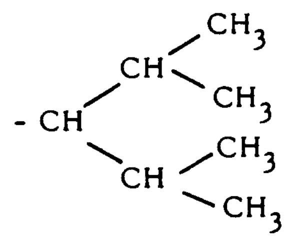
- R" group in example b6 is tert. butyl.

It should be remarked that all the above described polyamines can also be directly added in the formulation (through blending into the polyolcompound) i.e. "one-shot" method, instead of through prepolymerisation with the polyisocyanate in a separate step. In case of an equivalent weight ≦ 200, such molecules, when added by the "one-shot" method, also function as "amine- initiators" (see further), i.e. as a combination of co-catalyst and extender/cross-linker. In case of a functionality of 2, such polyamines will also increase mechanical strength properties, such as elongation and tear resistance.

The NCO index of these different isocyanates comprised in Table 1, representing the stoechiometric ratio between the NCO groups and the active hydrogen containing components, is generally comprised between 80 and 130 and preferably between 85 and 110.

The active hydrogen containing compounds, which are particularly appropriate to react with the isocyanate in order to form polyurethane, preferably consist of "basic polyols" and especially polyoxyalkylene compounds (polyetherpolyols), which are thus formed by polyaddition of propylene oxide and/or ethylene oxide on low molecular starters with OH, NH and/or $NH_2$ groups, which have a functionality of 2 to 8.

These compounds present specifically terminal groups consisting of OH groups, at least 50 % of which are primary OH groups, of secondary NH groups and/or of primary $NH_2$ groups.

Table 2 is grouping the polyetherpolyols which are most suitable for applying the invention.

TABLE 2

| TYPE | OH (*) | sec NH and/or prim. $NH_2$ | preferred funct. | preferred equiv.weight = MW / funct. | preferred starters |
|---|---|---|---|---|---|
| 1 | X | - | 2-6 | 100-2500 | polyalcohols with f 2-6 and IOH > 800 (***) |
| 2 (**) | (X) | X | 2-3 | 100-2000 | |

(*) : 50 % prim. OH (preferably > 70 % prim. OH)

(**) : Type 2 also known as "JEFFAMINES" (Texaco)

(***) : hydroxyl number

(X) : possibly present.

Other types of active hydrogen containing compounds are the polyesterpolyols forming ester condensation products of dicarboxylic acids with low molecular polyalcohols having a functionality of 2 to 4, preference being given to polyesterpolyols having a terminal hydroxyl number of 30 to 200 (100 % primary OH groups) and a functionality of 2 to 3.

A further very suitable compound with active hydrogen containing groups are the polytetramethylene ether glycols (PTMG), which are polytetrahydrofuran with 100 % primary OH groups, a functionality of 2 and a hydroxyl number of 35 to 200.

Finally, this active hydrogen containing compound can consist of polyols with a functionality of 2 to 3 and a hydroxyl number of 25 to 200, which are further modified with polymerized organic fillers, such as polyols grafted with styrene/acrylonitrile, "PHD" polyols and "PIPA" polyols, the filler content varying between 3 and 50 % by weight (see Belgian Patent Application No. 08701053). The polyols of this type which are preferred are the ones having a hydroxyl number of 25 to 35, a functionality of 2 to 3 and a filler content of 5 to 20 %.

The used chain extenders and/or cross-linkers can be considered as a special group of the active hydrogen containing compounds and contain only functional OH groups. Moreover, these ones have an equivalent weight of about 30 à 300 and preferably lower than 100. Table 3, given hereafter, shows the concentration of the chain extenders and/or cross-linkers in function of the equivalent weight of the used polyol as active hydrogen containing compound, which allows to obtain optimal results. In this table, the amounts are expressed in parts by weight per 100 parts "basic polyol" (b).

TABLE 3

| Equivalent weight | Conc. (parts by weight) | |
|---|---|---|
| | generally | preferably |
| < 500 | 2 - 30 | 4 - 25 |
| > 500 | 2 - 300 | 4 - 150 |

Typical preferred compounds of cross-linkers and chain extenders with only active OH groups having a functionality of 2 to 4, a hydroxyl number higher than 250 and a primary OH group concentration higher than 50 % are the next ones : ethylene glycol, propanediol, butanediol, pentanediol, hexanediol, glycerin, trimethylpropane, triethanolamine, trimethylolethane, pentaerythrol, bisphenol A and cyclohexanedimethanol,

and also possible addition products of all these examples with less than or equal to 5 moles ethylene oxide and/or propylene oxide per mole chain extender/cross-linker.

The nature of the above mentioned catalysts is further illustrated and described hereafter.

(1) "Pb cat"

These are lead compounds which are already known per se as catalysts for preparing polyurethane with an integral skin. Such catalysts have been described among others in the Dutch Patent Application No. 77,02676.

Thus, usually a compound from one of the following groups is used as organolead compound :

a) organolead (II) salts of carboxylic acids, containing at least one carboxylic group,

b) lead dithiocarbamates having formula :

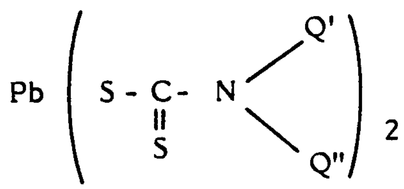

wherein Q' and Q" are different or the same and represent an alkyl group with 1 - 20 carbon atoms,

c) organolead (IV) compounds having the formula $PbQ_4'''$, wherein Q''' represents an alkyl group with 1 - 6 carbon atoms, and

d) lead (II) acetylacetonate.

More particularly, there has been determined that amongst these organolead compounds, the following compounds are very suitable :

a) organolead (II) salts of carboxylic acids such as lead acetate, adipate, citrate, 2-ethylhexoate, laurate, linoleate, naphthenate, octanoate, oleate, oxalate, palmitate, resinate, ricinoleate, salicylate, stearate, tallate and tartrate,

b) a dithiocarbamate having the formula :

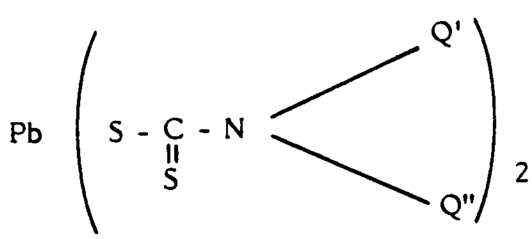

wherein Q′ and Q″ represent methyl, ethyl, butyl or amyl, and

c) the compounds having the formula $PbQ_4'''$, wherein Q‴ represents methyl or ethyl.

The Pb(II) carboxylates, being lead salts of organic monocarboxylic acids, are particularly preferred.

A typical carboxylic acid is a whether or not branched aliphatic monocarboxylic acid with formula R-COOH, wherein R is an alkyl having 7 to 12 carbon atoms, such as lead-2-ethylhexoate. Another carboxylic acid is naphthenic acid which forms lead naphthenate.

(2) "Bi cat"

Use is made of organic bismuth compounds which are known per se for preparing polyurethane with integral skin, described a.o. in Dutch Patent Application No. 80,01362.

Preference is especially given to three-valency bismuth compounds belonging to the same category as the above described organolead compounds, such as Bi-2-ethylhexoate and Bi-naphthenate.

(3) "Sn cat"

a. Sn(IV) carboxylates

These compounds correspond to following general formula :

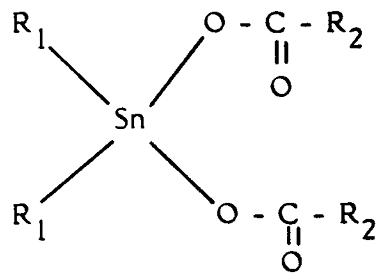

wherein $R_1$ is a ($C_1$-$C_4$) alkyl radical and $R_2$ forms a ($C_1$-$C_{12}$) alkyl radical or a naphthenic acid radical, the alkyl radicals being linear or branched.

Preference being given to compounds wherein $R_1$ is a methyl group and $R_2$ a ($C_7$-$C_{11}$) alkyl radical or a naphthenic acid radical, or also wherein $R_1$ is a butyl group and $R_2$ is a ($C_1$-$C_4$) alkyl radical.

b. Dialkyldistannoxane dicarboxylates

Those compounds have following general formula :

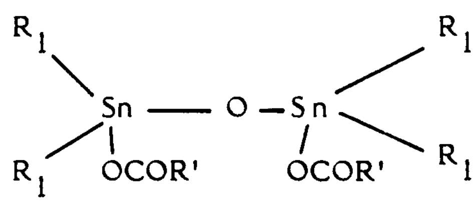

wherein $R_1$ is a ($C_1$-$C_4$) alkyl radical and R′ a ($C_1$-$C_{12}$) whether or not branched alkyl radical.

c. Alkyltinhalides

These compounds have the following general formula :

$(R_1)_x\ Sn(Hal)_y$

wherein $R_1$ is a ($C_1$-$C_4$) alkyl radical, "Hal" is a halogene, preferably chlorine or bromine, x + y = 4 and x or y varies from 1 to 3.

(4) "Alkaline cat"

These compounds are strong, alkaline catalysts having a pH larger than 10 and belonging to one or more of the following classes :

a) diazobicyclo-alkenes and salts of these with weak organic acids ($pK_a > 4$), having general formula :

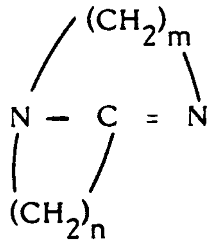

m = 3 - 7
n = 2 - 4

A typical preference is given to 1,8-diazobicyclo-(5,4,0)-undecene-7 as well as to the octoate or phenolate salt of this compound.

b) K, Na or Li salts of weak organic acids ($pK_a > 4$).

A typical preference is given to the octoate, phenolate and oleate salts of K or Na.

(5) "Amine initiators"

Such initiators which are known per se and which can be used in the method according to this invention, are described a.o. in Dutch Patent Applications 77,02676 and 80,01362, provided that a minimum functionality of 2 is required.

Aliphatic or alicyclic alkanolamines or polyamines, having amino group not directly attached to an aromatic ring are generally considered in this respect.

The number of NH and/or $NH_2$ groups is at least 2, if no OH groups are present and, at least 1 if OH groups are present.

The total number of reactive groups, formed by NH, $NH_2$ or OH, mostly varies between 2 and 5.

Typical preferred compounds, notably aliphatic compounds having a functionality of 2 to 4, are the following ones :
monoethanolamine, diethanolamine, diisopropanolamine, ethylenediamine,
isophoronediamine, N,N′-dimethyl(diethyl)-ethylenediamine,
2-amino-2-methyl (or ethyl) -1-propanol,
2-amino-1-butanol,
3-amino-1,2-propanediol,
2-amino-2-methyl (ethyl)-1,3-propanediol.

"Jeffamines" (Texaco) (propylene oxide addition products having mainly terminal primary $NH_2$ or secondary NH groups - functionality 2 à 3). Addition products of propylene oxide and/or ethylene oxide on ethylenediamine initiator (2 à 8 moles/mole ethylenediamine).

As mentioned already above the sufficient low reactive polyamines, suitable for the prepolimerization of the polyisocyanates, function also as amine initiators provided their molecular weight is less than 200 and that they are added by "one shot" method, i.e. that they are blended into the polyol compound.

(6) "Zeolite type cat"

These catalysts are alkaline aluminium silicates with Na and/or K ions, wherein the diameter of the micro-cavities is preferably comprised between 2 and 10 Angström and typically between 3 and 4 Angstrom and which show the following general formula :
$(M_2O)_a$ - $(Al_2O_3)_b$ - $(SiO_2)_c$ - $(H_2O)_d$, wherein M represents potassium and/or sodium, beside sodium and/or potassium, also calcium ions can possibly be present.

These silicates can be mixed, as fine powders or as pastes, in liquid dispersion media with the other reaction products for forming polyurethane.

It is important to notice that these zeolites have thereupon an extra possible function, notably the in situ dehydration of the active hydrogen containing compounds, mostly thus the polyols compounds, for example if a maximum density of the obtained polyurethane film, without cellular structure, is desired.

Very suitable catalytic systems, which are applicable according to the invention and which specifically promote the reactions of aliphatic and alicyclic NCO groups with active hydrogen containing compounds, such as OH, NH and $NH_2$ groups, are shown in the following Table 4.

TABLE 4

| Combin. ref. | "Pbcat" (1) | "Bi cat" (2) | "amine initiator" (5) | "Sn cat" (3) | "Zeolite type cat" (6) | "Alkaline cat" (4) |
|---|---|---|---|---|---|---|
| C1 | X | - | X | - | - | - |
| C2 | X | - | X | X | - | - |
| C3 | X | - | X | - | X | - |
| C4 | X | - | X | - | - | X |
| C5-C8 | X | - | X | (X) | (X) | (X) |
| C9 | - | X | X | - | - | - |
| C10 | - | X | X | X | - | - |
| C11 | - | X | X | - | X | - |
| C12 | - | X | X | - | - | X |
| C13-C16 | - | X | X | (X) | (X) | (X) |
| C17 | - | - | X | X | X | - |
| C18 | - | - | X | X | - | X |
| C19 | - | - | X | X | X | X |
| (x) indicates that at least two of the three catalysts are present. [types (3), (4) and (6)]. | | | | | | |

An explicite preference is given to the following catalytic combinations : C4, C5, C6, C7, C8, C11, C12, C13, C14, C15, C16 and C18.

Recommended concentration ranges of these catalysts are as follows :

- Pb catalyst : 0 à 2 % and preferably less than 0.5 % for reducing or avoiding a metallic lustre and a $H_2S$ effect (darkening by contact with $H_2S$ as a result of PbS formation) ;
- Bi catalyst : 0 to 2 % and preferably less than 1.5 % for the technologic processability and heat stability of the final products ;
- Sn catalyst : 0 to 4 % and preferably less than or equal to 2 ;
- "Alkaline catalyst" : 0 to 2, and preferably less than 1, a.o. for the technologic processability and physical properties of the final products, more in particular the mechanical strength ;
- "Zeolite type catalyst" : 0 à 5 and preferably 0 à 3 ;
- "Amine initiators" : 1 to 30 and preferably 2 to 10.

It should be noted that the overall concentration of catalysts and amine initiators is dependent on the catalyst combination type, the nature of the used isocyanates and active hydrogen containing compound, the reactive mixture temperature, the mould temperature, etc... For a well defined situation, this concentration is however usually higher than for a "RIM" (reaction injection moulding) or "casting" technique, and this in order to guarantee an optimal curing and a limited flow or run off of sprayed thin reaction mixture films.

The possibly used blowing agent may be as well of chemical as of physical nature.

For use as a chemical blowing agent, preference is given to an amount of water between 0 and 0.4 % by weight with respect to the total used raw material amount, except for the polyisocyanates, i.e. with respect to said active hydrogen containing compound, cross-linker, chain extender and initiator, an amount lower than 0.1 % by weight being preferred.

The amount of used physical blowing agent having a boiling point of 20 à 70 °C, is generally comprised between 0 and 0.4 moles with respect to 100 grams of the total amount of active hydrogen containing compound, preference being given to the total omission of a physical blowing agent. The most typical compounds are trichlorofluoromethane and methylene chloride. These physical blowing agents are preferably added to the isocyanate containing component.

In order to guarantee the colour stability of the sprayed polyurethane, the reaction mixture comprises preferably antioxidants and UV absorbers, the following synergic combination being preferred :

a) primary, substituted phenol antioxidants at a concentration which is usually comprised between 0.1 and 1 % by weight with respect to the total polyurethane polymer amount ;

b) substituted ("hindered") alicyclic amines ("HALS") at a concentration which is generally comprised between 0.1 and 1 % by weight of the total polyurethane polymer amount ;

c) secondary antioxidants (peroxide decomposition products) consisting of organic phosphites or thioesters at a concentration which is usually comprised between 0 and 5 % by weight of the total

polyurethane polymer amount ;

d) UV absorbers being preferably of the benzotriazole type, generally at a concentration between 0.1 and 1 % by weight of the total polyurethane polymer amount.

For colour pigments, use is preferably made of light stable, anorganic and/or organic, solid pigments which are added in the shape of a dispersion in a liquid medium, such as in polyol.

The solid pigment concentration is usually comprised between 1 and 10 % by weight with respect to the total polyurethane polymer amount and preferably between 2 and 5 % by weight.

In most cases, it is preferred to add an internal release agent to the reaction mixture, preference being given to the polydimethylsiloxane-polyether copolymer types at a concentration lower than 20 % by weight polyether with respect to the total molecule and lower than 50 % by weight ethylene oxide with respect to the total ethylene oxide and propylene oxide amount in the polyether chain. Such internal release agents do not only facilitate the demolding of the polyurethane films but mostly also reduce the amounts of gas micropores in the film outer surface.

Generally, the release agent concentration comprises between 0 and 3 % by weight with respect to the total polyurethane polymer amount, and preferably between 0.5 and 2 % by weight.

Another substance which is usually added to the reaction mixture is a neutral, physical, tixotropic thickening agent consisting preferably of fumed, coagulated silicon dioxide, the concentration of which is generally comprised between 0 and 3 % by weight of the total polyurethane polymer amount ; and preferably between 0.5 and 2 % by weight.

For spraying the light stable polyurethane foam with the hereabove described formulation, use is preferably made of a two-components system, wherein one component comprises the isocyanate and all of the additives which are with respect to this isocyanate during a sufficient time period stable and compatible with the latter and wherein the other component comprises the with respect to NCO groups active hydrogen containing component, more in particular polyols and the chain extenders, cross-linkers and initiators, and additives which are with respect to these different compounds during a sufficient time period stable and compatible with the latter .

The first mentioned component comprises thus, in addition to the isocyanate, for example certain antioxidants, UV absorbers, catalysts, internal release agents, plasticizers, fire retardants, physical blowing agents, fillers, tixotropic thickening agents and the like. The second component comprises preferably, in addition to the active hydrogen containing compound, such as polyol, chain extenders and/or cross-linkers, water, pigments and certain catalysts, anti-oxidants, UV absorbers, water, release agents, plasticizers, fire retardants, fillers, tixotropic thickening agents, etc.

These components are preferably preheated, before the spraying, upto a temperature not higher than 120° and usually between 30 and 70°C, and this in order to speed up the reactivity of the reaction mixture which is sprayed on the mould surface.

The viscosity of the reaction mixture which is sprayed on a mould surface is a very important parameter.

According to the invention, there is aimed at a temperature adjustment of the reaction mixture at spraying in such a way that the viscosity is not higher than 1200 cps and preferably not higher than 700 cps, this in order to obtain an as homogeneous as possible flow of the reaction mixture, and not lower than 200 cps preferably not lower than 500 cps in order to avoid run-off.

For the spraying of the reaction mixture, use is preferably made of a spray pistol working with or without air.

Mostly, use is made of the so-called airless two-components system without solvent.

The mould surface, the reaction mixture has to be sprayed against for the formation of a polyurethane film, can have very various geometric shapes. The different places of this surface do actually have to be within reach of the movable spray nozzle.

Further, this surface can be of any structure and nature and can be made of metal, plastic, rubber, leather, wood, whether or not provided with a film of an external release agent as generally used in the polyurethane casting and moulding methods.

In order to facilitate the curing of the reaction mixture at the moment it is sprayed on the mould surface, the latter is preferably heated up to a temperature between 30 and 100° and more specifically between 50 and 80°C.

The composition of the reaction mixture and the spray conditions, are preferably selected in such a manner that the films or layers, formed by spraying the reaction mixture on the mould surface, can be removed from the latter within less than 10 minutes after the spraying and preferably even within less than 3 minutes, and no excessive run-off of the reaction mixture occurs on this surface.

The most typical way for making finished pieces by applying the method according to the invention consists in that in a separate step and in a separate mould, a so-called back-foaming is done with a cellular, flexible to semi-rigid classic polyurethane foam, such as it is customary for the back-foaming of plastic foils.

In a very specific embodiment of the invention, a conventional polyurethane foam (MDI or TDI basis) with a typical mould foamed density of 50 to 600 kg/$m^3$ and a typical free rise density of 30 à 200 kg/$m^3$ is injected, after the spraying of a polyurethane film on a substantially hollow mould surface and before demoulding the latter, by means of a separate injection in the same mould cavity.

Preferably, there is sought to obtain in one single passage of the spray nozzle, a film thickness between 0.3 and 3 mm, thicker layers being however obtainable by spraying a number of different reaction mixture layers upon each other by successive spray nozzle passages.

The density of the obtained polyurethane film, which is preferably micro-cellular, is adapted in an advantageous manner between 500 and 1200 kg/$m^3$ by adjusting the amount of blowing agent, consisting of water and/or of low boiling solvents, and also the amount of air dispersed in the raw materials.

For some applications, it is important to realize a polyurethane layer substantially totally free of pores. This is realized according to the invention by degassing the isocyanate containing component and by degassing and dehydrating the active hydrogen containing component.

The hardness of the polyurethane film, formed on the mould surface, can be adjusted by the choice of the type and amount of the employed isocyanate, polyol, chain extender and/or cross-linker. Preference is given to a hardness between shore A 20 and shore D 80 depending on the applications/ requirements of the final PU films.

Finally, reinforcements such as glass fibre mats, can be inbedded in certain parts or in the complete, on the mould surface formed polyurethane film or layer. This can be done before or during the reaction mixture spraying.

Hereafter, a review is given of the abbreviations and codes used in this description and claims.

## 1. ISOCYANATES

I1 = IPDI = isophorone diisocyanate (Hüls Chemie)
= 3-isocyanatomethyl-3.5.5-trimethylcyclohexyl-isocyanate (37.8 % by weight NCO)

I2 = TMXDI = meta- or paratetramethyl xylene diisocyanate (Am.CYANAMID) (34.4 % by weight NCO).

I3 = HDI = 1,6-hexamethylene diisocyanate (50 % by weight NCO)

I4 = H6XDI = hydrogenated XDI (43 % by weight NCO) (TAKEDA CHEM. IND.).

I5 = H12MDI hydrogenated MDI
= DESMODUR W (MOBAY/BAYER)
= dicyclohexylmethane diisocyanate (31.8 % by weight NCO)

Ix-Iy = mixture of isocyanate trimers and isocyanate monomers based on an isocyanate Ix(I1,I2...) having a terminal NCO content = y (percent by weight free NCO groups with respect to the total isocyanate mixture).

Ix-Py/z = mixture of isocyanate quasi-prepolymer (with free monomer) based on an isocyanate Ix(I1,I2,...) having a terminal NCO content = y %. The prepolymer being based on the polyol type Z(1,2,3,4)

z = 1 : dipropylene glycol
z = 2 : trimethylolpropane
z = 3 : glycerin/propylene oxide addition product MW600
z = 4 : polypropylene glycol MW 400 (molecular weight : MW)

or on the polyamine type Z(5,6,7)

z = 5 : a polyamine having the formula :

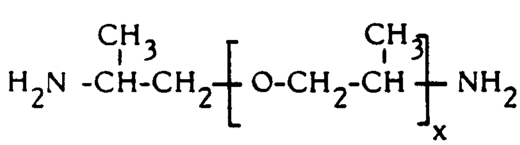

having a molecular weight of 2000

z = 6 : a polyamine having the formula :

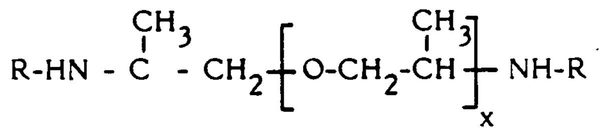

wherein R is isohexyl and which has a molecular weight of 2000

z = 7 : a polyamine having the formula :

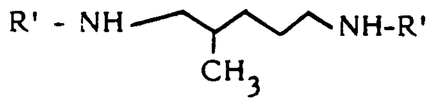

wherein R' is

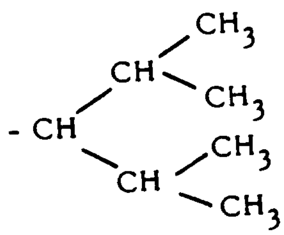

and which has a molecular weight of 313

Ix-Ty : = isocyanurate-trimer (with isocyanate monomer) mixture based on an isocyanate Ix(I1,I2...) having a terminal NCO content = y %.

2. Active hydrogen containing compounds:

- P1 = addition product of glycerin, propylene oxide and ethylene oxide, having a hydroxyl number of 35, 80 % primary OH groups, a molecular weight of 4800 and an equivalent weight of 1600.
- P2 = addition product of glycerin, propylene oxide and ethylene oxide, having a hydroxyl number of 28, a primary OH group content of 85 %, a molecular weight of 6000 and an equivalent weight of 2000.
- P3 = addition product of diethylene glycol with propylene oxide and ethylene oxide, having a hydroxyl number of 28, a primary OH groups content of 90 %, a molecular weight of 4000 and an equivalent weight of 2000.
- P4 = addition product of pentaerythrol with propylene oxide and ethylene oxide, having a hydroxyl number of 28, a primary OH groups content of 80 %, a molecular weight of 8000 and an equivalent weight of 2000.
- P5 = polytetramethylene oxide glycol (PTMG) having a hydroxyl number of 56, a primary OH groups content of 100 %, a molecular weight of 3000 and an equivalent weight of 1500.
- P6 = an addition product of sorbitol with propylene oxide and ethylene oxide, having a hydroxyl number of 400, a primary OH groups content of 55 %, a molecular weight of 840 and an equivalent weight of 140.
- P7 = addition product of glycerin and propylene oxide and terminal $NH_2$ groups, having a molecular weight of 5000 (Jeffamine T5000-TEXACO).
- P8 = polycaprolacton ester not according to the invention having a hydroxyl number of 56, a molecular weight of 2000 and an equivalent weight of 1000.
- P9 = polycondensate ester between diethylene glycol and adipic acid, having a hydroxyl number of 56, a molecular weight of 2000 and an equivalent weight of 1000.
- P10 = DURACARB 124 (PPG Industries Inc.-USA) = polycarbonate diol having an $I_{OH}$ number of 60.

3. Chain extenders, cross-linkers and amine initiators

| | |
|---|---|
| MEG = | monoethylene glycol |
| DEG = | diethylene glycol |
| BD = | 1,4-butanediol |
| TMP = | trimethylolpropane (or possibly a liquid addition product of TMP with 1 mole ethylene oxide) |
| TEOA = | triethanolamine |
| DEOA = | diethanolamine |
| MEOA = | monoethanolamine |
| CD400 = | Jeffamine CD400 (TEXACO) = addition product of a diol initiator, with propylene oxide and terminal secondary NH groups, having a molecular weight of 400 and an equivalent weight of 200. |
| EDA = | ethylenediamine |
| Quadrol = | addition product of ethylendiamine and 4 moles PO |
| IPDA = | isophorondiamine |
| AEPD = | 2-amino-2-ethyl-1,3-propanediol |
| AMP = | 2-amino-2-methyl-1-propanol |
| a2 = | a polyamine having the formula : |

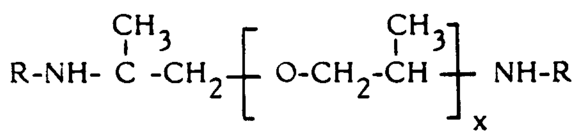

wherein R is isohexyl and which has a molecular weight of 200 (equivalent weght = 100)

b4 = a polyamine having the formula :

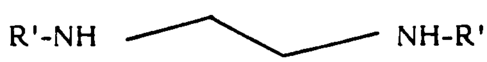

wherein R′ is

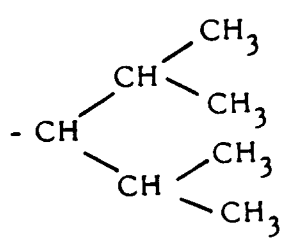

and which has a molecular weight of 256 (equivalent weight = 128).

4. Catalysts (except for amine initiators)

a) Organolead catalysts (LC)

LC1 = lead-2-ethylhexoate
LC2 = lead-naphthenate

b) Organobismuth catalysts (BC)

BC1 = bismuth-(III)-2-ethylhexoate
BC2 = bismuth-(III)-naphthenate

c) Organotin catalysts (TC)

TC1 = dimethyltindineodecanoate
TC2 = dibutyltindiacetate
TC3 = tetrabutyltindistanoxane dilaurate
TC4 = dibutyltin dichloride

d) Alkaline catalysts (AC)

AC1 = 1,8-diazabicyclo (5,4,0) undecene-7-phenolate
AC2 = idem AC1, but octoate salt
AC3 = potassium octoate
AC4 = sodium phenolate

e) Zeolite type catalysts (ZC)

ZC1 = sodium aluminium silicate - 3 Angström (powder)
ZC2 = potassium aluminium silicate - 4 Angström (50 % powder, spread as a paste in ricinus oil)

5. Various additives

a) Antioxidizers/UV absorbers (AO/UV)

A mixture of antioxid ants and UV absorbers consisting in percent by weight of :
- 40 % trisphenylphosphite
- 20 % 2-(2-hydroxy-3,5-di tert.amyl-phenyl)-2H-benzotriazole
- 20 % pentaerythrityl-tetrakis [3-(3,5-di tert.butyl-4-hydroxyphenol)-propionate]
- 20 % di-sebacate ester of 4-hydroxy-2,2,6,6,-tetramethylpiperidine

b) Tixotropic agents

A200 = Aerosil 200 (DEGUSSA - Germany) Coagulated, fumed silicon dioxide having an active surface of 200 $m^2$/gr and a grain size of about 12 $\mu$.

c) Colour pigment (concentrated dispersion in a P1 type active hydrogen containing compound).

A mixture(in the proportions 1:1:1) of :
- titanium dioxide (white)
- copper phthalocyanine (blue)
- di-azo condensate (red)

The concentrations given in the formulations relate to the solid pigments.

d) Internal release agent (IRA)

This release agent is based on a silicon, more in particular of the type polydimethylsiloxane-polyether copolymer having 90 % by weight siloxane and 10 % by weight polyether groups, the polyether chain containing 20 % ethylene oxide and 80 % propylene oxide units and the terminal groups being OH groups.

6) Kinetic process parameters

a) FT : fibre forming time "fibre time" (expressed in seconds), indicates the beginning of the gelling, i.e. the moment on which a fibre can be drawn of the reaction mixture for example by means of a glass rod. This constitutes a measure for the pot-life.

b) TFT : "tac free time" (expressed in seconds) is the time at which the surface skin becomes substantially dry, i.e. not any more sticky.

c) DT : "demoulding time" (expressed in seconds) indicates the time at which the obtained film can be removed from the mould surface without problems, i.e. without sticking, deformation, etc..

d) run off : is a measure for the tendency of the reaction mixture, sprayed on the mould surface, to run off (at a too low viscosity build up) from a higher mould surface level to a lower level.

The visual codes thereof are as follows :

| | |
|---|---|
| Code 0 : | no "run off" (= ideal situation) |
| Code 1 : | tendency to run off (still satisfying) |
| Code 2 : | a slight run off (acceptable limit) |
| Code 3 and higher : | more definite run off (not acceptable) resulting in too large thickness variations of the sprayed film. |

7. Properties of the sprayed films :

| | |
|---|---|
| D : | apparent density (gr/cm$^3$) |
| ER : | elongation at rupture (%) - ASTM D412 |
| RR : | tensile strength at rupture (MPa) - ASTM D412 |
| TR : | tear resistance in N/cm - ASTM D624 |
| Shore A (D) : | surface hardness - ASTM D2240 |
| WOM : | weatherometer test (accelerated light/heat aging test) under the following test conditions (ATLAS ES25 apparatus) |

- xenon radiation source
- black panel temperature 88 °C
- cycle : 3.8 hours light/1 hour dark (no direct water spray on samples)
- test duration : 1000 hours.

In each of the examined cases, substantially no discouloration ($\Delta E<1.5$) or gloss variation (gloss retention > 70 % with respect to the original gloss degree before the WOM test) has been determined.

Internal codes relating to the visual degradation of the examined polyurethane film surface (cracks, brittleness) :

| | |
|---|---|
| code 0 : | completely satisfying |
| code 1 : | tendency to cracks in surface (only microscopically visible) |
| code 2 : | small cracks in surface |
| code 3 and higher : | moderate to strong cracks (not acceptable). |

The mention "OK" for the visual appearance indicates that no visual defects concerning the micro porous skin structure, excessive gas bubbles, colour streak formation or gloss differences in the surface of the sprayed film, have been observed.

The following Table 5 shows some specific examples of specific embodiments of the method according to the invention, except for Example 8 wherein use is made of caprolactone polyol P8.

In these tables, the hereabove defined abbreviations and codes are thus used.

Further, the technology processing conditions are in these examples the following ones :

- high pressure, two components spray unit (with spray pistol)
- raw materials temperature : 60 °C
- metal mould surface temperature : 60 °C
- total output of components : 20 gr/sec.

- sprayed film thickness : about 2 mm

## Table 5 (A)

| Example n° | 1 | 2 | 3 | 4 | 5 |
|---|---|---|---|---|---|
| act. H compound (basic polyol) | P1 : 100 | P2 : 100 | P3 : 100 | P7 : 100 | P9 : 100 |
| isocyanate | I1 - P28/1 | I1 - T30 | I1 - T27 | I1 - P26/4 | I1 - P27/3 |
| NCO index | 105 | 95 | 100 | 95 | 90 |
| catalyst system (excluded amine initiators) | LC1 : 0,5<br>AC4 : 0,8 | LC2 : 0,4<br>AC1 : 1<br>TC3 : 0,5 | BC1 : 0,5<br>ZC1 : 1 | LC1 : 0,4 | BC2 : 0,5<br>TC1 : 0,5 |
| chain ext./crosslinker (+ amine initiators) | DEG : 8<br>AMP : 5 | MEG : 5<br>CD400 : 6 | TMP : 3<br>quadrol : 2<br>DEOA : 4 | MEG : 7<br>AEPD : 2 | BD : 6<br>IPDA : 6 |
| various | | | | | |
| AO/UV | 2 (all examples) | | | | |
| water | 0,05 | 0,05 | 0,08 | 0,06 | 0,07 |
| tixotropic add. | 2 | 1,5 | 1,5 | 1 | 1 |
| color pigment | 5 (all examples) | | | | |
| IRA | 2 (all examples) | | | | |
| PROCESS PA. | | | | | |
| FT (sec) | 8 | 6 | 12 | 7 | 10 |
| TFT (sec) | 30 | 25 | 55 | 30 | 35 |
| DT (sec) | 120 | 90 | 150 | 60 | 120 |
| run off (code) | 1 | 0/1 | 1 | 0 | 0/1 |
| visual | OK (all examples) | | | | |
| Properties PU | | | | | |
| D | 0,92 | 0,95 | 0,88 | 0,90 | 0,94 |
| ER | 205 | 180 | 215 | 200 | 250 |
| RR | 4 | 6 | 8 | 7 | 9 |
| TR | 290 | 350 | 330 | 370 | 410 |
| Shore A(D) | 64A | 52A | 57A | 54A | 70A |
| WOM test 1000 h(code) | 0/1 | 1 | 1/2 | 0/1 | 1 |

## Table 5 (B)

| Example n° | 6 | 7 | 8 | 9 | 10 |
|---|---|---|---|---|---|
| act. H compound (basic pol.) | P1 : 100 | P4 : 100 | P8 : 100 | P5 : 100 | P1 : 100 |
| isocyanate | I1-T27 | I2 - P26/2 | I3 - B30 | I3 - T30 | I4 - P32/3 |
| NCO index | 100 | 100 | ------ | ------ | ------ |
| catalyst system (excluded amine initiators ) | LC1:0,3<br>AC1 : 0,3<br>TC1 : 1 | LC1 : 0,4<br>AC1 : 1,3<br>TC1 : 0,3 | BC1 : 1 | LC1 : 0,3<br>ZC2 : 0,9 | BC1 : 0,5<br>TC4 : 0,3 |
| chain ext./ crosslinker (+ amine initiators) | MEG:3<br>b4 : 12 | MEG : 4<br>TMP : 4<br>DEOA : 6 | DEG : 5<br>TEOA : 2<br>AMP : 6 | DEG : 5<br>TEOA : 2<br>AMP : 6 | BD : 8<br>DEOA : 8 |
| various | | | | | |
| AO/UV | 2 | 4 | 3 | 3 | 2 |
| water | 0,05 | 0,09 | 0,05 | 0,03 | 0,04 |
| tixo tropic addi. | 1,5 | 1,5 | 1,8 | 1,6 | 1,4 |
| color pigment | 5 | 5 | ------ | ------ | ------ |
| IRA | 2 | 2 | ------ | ------ | ------ |
| PROCESS PA. | | | | | |
| FT (sec) | 8 | 10 | 9 | 9 | 8 |
| TFT (sec) | 35 | 40 | 35 | 30 | 35 |
| DT (sec) | 150 | 90 | 120 | 90 | 120 |
| run off (code) | 0/1 | 0/1 | 0/1 | 0/1 | 0/1 |
| visual | OK | OK | ------ | ------ | ------ |
| Properties PU | | | | | |
| D | 0,90 | 0,83 | 0,91 | 1,05 | 0,96 |
| ER | 330 | 210 | 170 | 180 | 190 |
| RR | 9 | 7 | 4 | 4 | 5 |
| TR | 390 | 400 | 240 | 250 | 310 |
| Shore A(D) | 71A | 61A | 70A | 63A | 65A |
| WOM test 1000 h (code) | 1 | 1 | 1 | 1 | 0/1 |

## Table 5 (C)

| Example n° | 11 | 12 | 13 | 14 | 15 |
|---|---|---|---|---|---|
| act. H compound (basic polyol | P1 : 100 | P1 : 100 | P7 : 100 | P1 : 100 | P10 :100 |
| isocyanate | I5 -P22/4 | I1-P2615 | I2-P26/6 | I3-P30/5 | I3-P35/7 |
| NCO index | 100 | 100 | 100 | 100 | 100 |
| catalyst system (excluded amine initiators) | LC2 : 0,5<br>AC3 : 1,5 | LC1 : 0,3<br>AC1 : 0,5<br>TC3 : 0,3 | LC1 :0,3<br>AC1 : 0,2 | TC1 : 0,5 | TC2 : 0,5 |
| chain ext./ crosslinker (+ amine initiators) | BD: 10<br>AEPD : 5 | MEG : 8<br>DEOA: 4 | TMP : 10<br>DEOA : 5 | BD : 12<br>02 : 4 | BD : 8<br>b4 : 8 |
| various<br>AO/UV<br>water<br>tixotropic add.<br>color pigment<br>IRA | <br>2<br>0,04<br>1,2<br>5<br>2 | <br>3<br>0,05<br>1,5<br>5<br>2 | <br>3<br>0,03<br>1,0<br>5<br>2 | <br>3<br>0,03<br>1,5<br>5<br>2 | <br>3<br>0,04<br>1,5<br>5<br>2 |
| PROCESS PA.<br>FT (sec)<br>TFT (sec)<br>DT (sec)<br>run off (code) visual | <br>12<br>35<br>120<br>1 | <br>11<br>35<br>100<br>0/1 | <br>9<br>35<br>90<br>0 | <br>10<br>35<br>100<br>0/1 | <br>10<br>35<br>100<br>0/1 |
| Properties PU<br>D<br>ER<br>RR<br>TR<br>Shore A(D)<br>WOM test 1000 h (code) | <br>0,95<br>250<br>6<br>370<br>58 A<br>1 | <br>0,88<br>240<br>7<br>340<br>61 A<br>1 | <br>0,92<br>260<br>8<br>350<br>60 A<br>1 | <br>0,90<br>270<br>7<br>390<br>70 A<br>1 | <br>0,86<br>300<br>7<br>420<br>75 A<br>1 |

Table 5 (D)

| Example N° | 16 | 17 | 18 | 19 | 20 |
|---|---|---|---|---|---|
| act. H compound (basic pol.) | P1 : 100 | P7 : 100 | P1 : 100 | P1 : 100 | P6 : 100 |
| isocyanate | I1 - T28 | I1 - P28/1 | I2 - P26/2 | I1 - T30 | I1 - T30 |
| NCO index | 105 | 105 | 110 | 105 | 105 |
| catalyst system (excluded amine initiators) | TC1 : 2<br>AC1 : 0,5 | TC3 : 1<br>ZC2 : 0,5 | LK1 : 0,5<br>TC1 : 1 | TC2 : 1,0<br>AC2 : 0,5 | TC2 : 1,2<br>AC3 : 0,7 |
| chain exten./ crosslinker (+ amine initiators) | MEG : 10<br>AEPD : 8 | BD : 25<br>CD400 : 6 | TMP : 15<br>DEOA : 6 | TMP : 60<br>quadrol : 20<br>EPDA : 4 | MEG : 6<br>TEOA : 3<br>DEOA : 4 |
| various | | | | | |
| AO/UV | 2 → | | | | |
| water | 0,04 | 0,02 | 0,10 | 0,30 | 0,25 |
| tixo tropic add. | 1,0 | 0,9 | 0,9 | 0,9 | 0,9 |
| color pigment | 5 → | | | | |
| IRA | 3 → | | | | |
| | 0 | 0 | 0 | 4 | 0 |
| PROCESS PAR. | | | | | |
| FT (sec) | 10 | 8 | 8 | 6 | 8 |
| TFT (sec) | 35 | 25 | 30 | 25 | 30 |
| DT (sec) | 90 | 60 | 75 | 60 | 75 |
| run off (code) | 1 | 0 | 0/1 | 0 | 0/1 |
| visual | OK → | | | | |
| Properties PU | | | | | |
| D | 0,91 | 1,02 | 0,85 | 0,60 | 0,77 |
| ER | 185 | 240 | 210 | 10 | 12 |
| RR | 12 | 15 | 14 | 23 | 31 |
| TR | 410 | 530 | 605 | NA | NA |
| Shore A(D) | 80A | 82A | 45D | 78D | 80D |
| WOM test 1000h (code) | 0/1 | 0/1 | 1 | 0/1 | 0 |

From the examples 21 to 25 following hereinafter in Table 6, it can be deducted that if one or more catalysts or initiators are deleted or if their concentration is strongly reduced, the reactivity is reduced too fast thereby arising a too critical run off of the reaction mixture and a too slow curing of the spayed film.

In the examples 21 to 25 of Table 6, the same formulations as in exemple 1 are repeated, however the catalysts and initiators amount being reduced as shown in the Table.

Table 6

| Example n° | concentration (pph) | | | FT (sec) | TFT (sec) | DT (sec) | RUN OFF (CODE) | VISUAL APPEARANCE |
|---|---|---|---|---|---|---|---|---|
| | LC1 | AC4 | AMP | | | | | |
| 1 | 0,5 | 0,8 | 5 | 8 | 30 | 120 | 1 | OK |
| 21 | 0,5 | 0 | 5 | 30 | 120 | 360 | 1-2 | OK |
| 22 | 0,25 | 0,4 | 5 | 25 | 120 | 300 | 2 | OK |
| 23 | 0,25 | 0,4 | 2,5 | 35 | 180 | 420 | 3 | OK limit |
| 24 | 0 | 1,5 | 5 | 120 | 600 | +/-1h | ≫3 | unacceptable |
| 25 | 0,5 | 0,8 | 0 | 180 | 600 | +/-1h | ≫3 | unacceptable |

## Claims

**1.** A method for making a light stable polyurethane film comprising the steps of :
- preparing a polyurethane reaction mixture containing an isocyanate compound having at least two NCO-groups which are not directly attached to an aromatic group, and a compound containing active hydrogen with respect to NCO groups, and wherein the latter compound is reacting with said isocyanate compound in the presence of a chain extender and/or a cross-linker and a catalyst ; and
- spraying said reaction mixture by means of a spray pistol onto a surface so as to form said polyurethane film by at least one pass of the spray pistol over said surface, characterized in that, in order to permit said reaction mixture to be sprayed in a homogeneous thickness of 0,3 to 3 mm per pass of said spray pistol onto an open mould surface and to permit the so obtained polyurethane film to be demoulded after a demoulding time ("DT") less than 10 minutes, (a) use is made of an active hydrogen containing compound, other than a caprolactone polyol, wherein the functional groups consist for at least 50 % of an active $CH_2OH$, NH and/or $NH_2$ group, the functionality of which varies from 2 to 8 and the equivalent weight of which is comprised between 100 and 3500, together with 2 to 300 parts, per 100 parts of said compound, of a chain extender and/or a cross-linker, the functional groups of which are OH groups, at least 50 % of which are primary OH groups, the equivalent weight of which is less than 100 and the functionality of which varies from 2 to 6, and with a catalytic system which comprises at least an organic lead, bismuth and/or tin (IV) compound and at least an amine initiator, having a functionality of 2 to 6, an equivalent weight lower than or equal to 200, and at least one aliphatic or alicyclic $NH_2$ or NH group; and (b) said reaction mixture is preheated upto a temperature not higher than 120°C so that its viscosity is situated between 500 and 1200 cps upon spraying, and said open mould surface is preheated to a temperature of between 30 and 100°C.

**2.** A method according to claim 1, characterized in that at the most 0.4 % of water and at the most 0.04 moles of a physical blowing agent, having a boiling point of 20 to 70°C, is added with respect to 100 grams of said active hydrogen containing compound, cross-linker, chain extender and initiator.

**3.** A method according to anyone of claims 1 or 2, characterized in that an isocyanate is used consisting mainly of IPDI monomer and/or a mixture of IPDI monomer and IPDI derivatives, such as trimers, especially isocyanurate or biuret trimers, prepolymers and/or carbodiimide/urethidion derivatives, in such ratio's which allow to obtain a NCO value of 15 to 37.8 in procent by weight.

**4.** A method according to anyone of claims 1 to 3, characterized in that an isocyanate is used consisting mainly of TMXDI monomer, (with meta and/or para isomer), prepolymers, biuret trimer and/or carbodiimide/urethidion derivatives, in such ratio's which allow to obtain a NCO value of 15 to 34.4 in percent by weight.

5. A method according to anyone of claims 1 to 4, characterized in that use is made of an isocyanate consisting mainly of HDI monomer possibly with HDI derivatives, such as trimers, especially isocyanurate or biuret trimers, prepolymers and/or carbodiimide/urethidion derivatives, in such ratio's which allow to obtain a NCO value of 15 to 50 in percent by weight.

6. A method according to anyone of claims 1 to 5, characterized in that an isocyanate is used consisting mainly of H6XDI monomer possibly with H6XDI derivatives, such as trimers, especially isocyanurate or biuret trimers, prepolymers and/or carbodiimide/urethidion, derivatives, in such ratios which allow to obtain a NCO value of 15 to 43 in percent by weight.

7. A method according to anyone of claims 1 to 6, characterized in that an isocyanate is used consisting mainly of H12MDI monomer possibly with H12MDI derivatives, such as trimers, especially isocyanurate or biuret trimers, prepolymers and/or carbodiimide/urethidion derivatives, in such ratio's which allow to obtain a NCO value of 15 to 31.8 in percentage by weight.

8. A method according to anyone of claims 3 to 7, characterized in that prepolymers based on polyetherpolyols, chain extenders and/or cross-linkers having as functional groups only OH (primary and/or secondary) a functionality of 2 to 6 and a hydroxyl number of 15 to 1800, are used.

9. A method according to anyone of claims 1 to 8, characterized in that use is made of an active hydrogen containing compound, consisting mainly of polyether alcohols which are formed by the polyaddition of propylene oxide and/or ethylene oxide on low molecular initiators.

10. A method according to anyone of claims 1 to 9, characterized in that use is made of an active hydrogen containing compound which comprises polyester alcohols consisting of the ester condensation products of dicarboxylic acids with low molecular polyalcohols having a functionality of 2 to 4.

11. A method according to anyone of claims 1 to 10, characterized in that use is made of an active hydrogen containing compound consisting mainly of polytetramethylene ether glycols (PTMG).

12. A method according to anyone of claims 1 to 11, characterized in that use is made of an active hydrogen containing compound consisting mainly of polyetherpolyols having a functionality of 2 to 3, a hydroxyl number of 15 to 200, and which are possibly modified with polymerized organic fillers, such as polyols grafted with styrene/acrylonitrile, PHD polyols and PIPA polyols, the filler content varying from 0 to 50 % by weight.

13. A method according to anyone of claims 1 to 12, characterized in that use is made of an active hydrogen containing compound consisting mainly of polyols having at least 70 % primary OH groups.

14. A method according to anyone of claims 1 to 13, characterized in that use is made of a chain extender and/or cross-linker consisting mainly of at least one of the following substances : ethylene glycol, propanediol, triethanolamine, butanediol, pentanediol, hexanediol, glycerin, trimethylpropane, trimethylolethane, pentaerythrol, bisphenol A, cyclohexanedimethanol, and ethylene oxide addition products of these substances with less than 5 moles ethylene oxide per mole of said substances.

15. A method according to anyone of claims 1 to 14, characterized in that use is made of a catalytic system consisting at least of two elements being said amine initiator and at least one of the following metal compounds : (a) organic lead and/or bismuth catalysts, especially salts of organic acids, such as octoate and naphthenate salts, or (b) Sn (IV) carboxylates having general formula (A) :

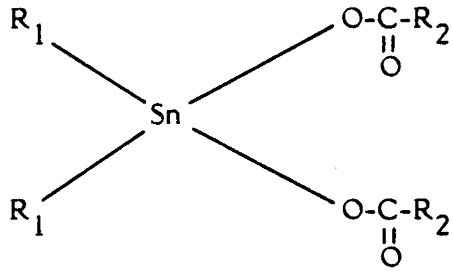

wherein $R_1$ represents a methyl group and $R_2$ forms a ($C_1$-$C_{12}$) alkyl radical or a naphthenic acid radical, the alkyl radicals being linear or branched, or (c) dialkyldistannoxane dicarboxylates having general formula (B) :

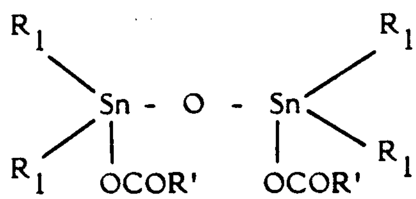

wherein $R_1$ represents a ($C_1$-$C_4$) alkyl radical and R' a ($C_1$-$C_{12}$) whether or not branched alkyl radical or (d) alkyltinhalides having general formula $(R_1)_xSn(Hal)_y$, wherein $R_1$ represents a ($C_1$-$C_4$) alkyl radical and "(Hal)" a chlorine or bromine atom, x + y = 4 and x or y varies from 1 to 3.

**16.** A method according to anyone of claims 1 to 15, characterized in that use is made of an amine initiator comprising at least one of the following compounds : monoethanolamine, diethanolamine, diisopropanolamine, ethylenediamine, isophoronediamine, N,N'-dimethyl(diethyl)-ethylenediamine, 2-amino-2-methyl(or ethyl)-1-propanol, 2-amino-1-butanol,
3-amino-1,2-propanediol,
2-amino-2-methyl(ethyl)-1,3-propanediol
"Jeffamines" (Texaco) (propylene oxide addition products having mainly terminal primary $NH_2$ or secondary NH groups - functionality 2 à 3 - equivalent weight < 200).

**17.** A method according to anyone of claims 1 to 16, characterized in that use is made of a catalytic system comprising at least an amine initiator together with an organic lead, tin or bismuth compound and (a) a zeolite type catalyst formed of an alkaline aluminium silicate with sodium and/or potassium ions, and/or (b) an alkaline catalyst having a pH higher than 10 and consisting of diazobicyclo-alkenes or salts of the latter with weak organic acids or consisting of potassium, sodium or lithium salts of weak organic acids.

**18.** A method according to anyone of claims 1 to 17, characterized in that an internal release agent is added to the reaction mixture, consisting preferably of a polydimethylsiloxane-polyether copolymer having less than 20 % by weight of polyether with respect to the total molecule and less than 50 % by weight ethylene oxide with respect to the sum of ethylene oxide and propylene oxide in the polyether chain, the concentration of this release agent varying between 0 and 5 % by weight with respect to the total polyurethane polymer amount.

**19.** A method according to anyone of claims 1 to 18, characterized in that use is made of a tixotropic thickening agent consisting preferably of fumed coagulated silicon dioxide at a concentration between 0 and 3 % by weight with respect to the total polyurethane amount.

**20.** A method according to anyone of the previous claims, characterized in that said polyurethane reaction mixture is sprayed according to a two components system, wherein one component comprises the isocyanate and all of the additives which are with respect to this isocyanate during a sufficient time

period stable and compatible with the latter and wherein the other component comprises the compounds containing active hydrogen with respect to NCO groups, especially polyols, chain extenders and cross-linkers, and additives which are with respect to these compounds during a sufficient time period stable and compatible with the latters.

**21.** A method according to claim 20, characterized in that the components are preheated up to a temperature not higher than 120 °C and preferably between 30 and 70 °C, before the spraying.

**22.** A method according to claim 20 or 21, characterized in that the temperature of the polyurethane reaction mixture is adjusted upon spraying in such a manner that the viscosity thereof is not higher than 700 cps.

**23.** A method according to anyone of claims 20 to 22, characterized in that said open mould surface, the polyurethane is sprayed on, is kept at a temperature of 50 to 80 °C.

**24.** A method according to anyone of claims 20 to 23, characterized in that the density of the sprayed polyurethane film is adjusted between 500 and 1200 kg/$m^3$ by adapting the amount of blowing agent and dispersed air in the raw materials.

**25.** A method according to anyone of claims 20 to 24, characterized in that a polyurethane film, substantially free of pores and having a density of 900 to 1200 kg/$m^3$ is formed by degassing and dehydrating before the spraying, at least the component comprising the active hydrogen containing compound.

**26.** A method according to anyone of claims 20 to 25, characterized in that the hardness of the sprayed polyurethane film is adjusted between shore A 20 and shore D 80 by selecting the type and the amount of the isocyanate, the active hydrogen containing compound, the chain extender and/or the cross-linker.

**Patentansprüche**

**1.** Verfahren zur Herstellung eines lichtbeständigen Polyurethanfilms umfassend die Schritte:
   - Herstellen eines Polyurethan-Reaktionsgemisches, welches eine Isocyanatverbindung mit mindestens zwei, nicht direkt an eine aromatische Gruppe gebundenen NCO-Resten und eine in bezug auf die NCO-Reste aktiven Wasserstoff enthaltende Verbindung enthält, wobei die letztere Verbindung mit der Isocyanatverbindung in Anwesenheit eines Kettenverlängerers und/oder eines Quervernetzungsmittels und eines Katalysators umgesetzt wird, und
   - Aufsprühen des Reaktionsgemisches mittels einer Sprühpistole auf eine Oberfläche zum Herstellen eines Filmes durch mindestens eine Passage der Sprühpistole über die Oberfläche hinweg, um das Aufsprühen des Reaktionsgemisches in einer homogenen Dicke von 0,3 bis 3 mm pro Passage der Sprühpistole auf die offene Formoberfläche und die Entnahme des so erhaltenen Polyurethanfilms nach einer Entnahmezeit ("EZ") von weniger als 10 Minuten zu gestatten, wobei
     (a) von einer anderen aktiven Wasserstoff enthaltenden Verbindung als Caprolactonpolyol, in der die funktionellen Gruppen mindestens zu 50 % aus aktiven $CH_2OH$-, NH- und/oder $NH_2$-Gruppen, deren Funktionalität zwischen 2 und 8 schwankt und deren Äquivalentgewicht zwischen 100 und 3500 liegt, zusammen mit 2 bis 300 Teilen (auf 100 Teile der Verbindung) eines Kettenverlängerers und/oder eines Quervernetzungsmittels, deren Funktionalität zwischen 2 und 6 variieren kann, und zusammen mit einem katalytischen System Gebrauch gemacht wird, welches mindestens eine organische Blei-, Wismut- und/oder Zinn-(IV)-verbindung und mindestens einen Amininitiator enthält mit einer Funktionalität zwischen 2 und 6, einem Äquivalentgewicht kleiner oder gleich 200 und mindestens einer aliphatischen oder alicyclischen $NH_2$- oder NH-Gruppe und wobei
     (b) das Reaktionsgemisch auf eine Temperatur von nicht höher als 120 °C vorgewärmt wird, so daß dessen Viskosität beim Sprühen zwischen 500 und 1200 cps liegt, und die offene Formoberfläche auf eine Temperatur von 30 bis 100 °C vorgeheizt wird.

**2.** Verfahren gemäß Anspruch 1, dadurch gekennzeichnet, daß maximal 0,4 % Wasser und maximal 0,04 Mol eines physikalischen Treibmittels mit einem Siedepunkt von 20 bis 70 °C auf 100 g der aktiven Wasserstoff enthaltenden Verbindung, des Kettenverlängerers, Quervernetzungsmittels und des Initiators zugegeben wird.

3. Verfahren gemäß einem der Ansprüche 1 oder 2, dadurch gekennzeichnet, daß ein Isocyanat, welches im wesentlichen aus IPDI-Monomer und/oder einem Gemisch aus IPDI-Monomer und IPDI-Derivaten wie Trimeren, insbesondere Isocyanurat- oder Biurettrimeren, Präpolymeren und/oder Carbodiimid-/Urethidionderivaten besteht, in solchen Verhältnissen verwendet wird, daß ein NCO-Wert zwischen 15 bis 37,8 Gew.-% erhalten werden kann.

4. Verfahren gemäß einem der Ansprüche 1 bis 3, dadurch gekennzeichnet, daß ein Isocyanat, welches im wesentlichen aus TMXDI-Monomer, (mit meta- und/oder para-Isomeren), Präpolymeren, Biurettrimer und/oder Carbodiimid-/Urethidionderivaten besteht, in solchen Verhältnissen verwendet wird, daß ein NCO-Wert zwischen 15 und 34,4 Gew.-% erhalten werden kann.

5. Verfahren gemäß einem der Ansprüche 1 bis 4, dadurch gekennzeichnet, daß ein Isocyanat, welches im wesentlichen aus HDI-Monomer eventuell zusammen mit HDI-Derivaten wie Trimeren, insbesondere Isocyanurat- oder Biurettrimeren, Präpolymeren und/oder Carbodiimid-/Urethidionderivaten besteht, in solchen Verhältnissen verwendet wird, daß ein NCO-Wert zwischen 15 und 50 Gew.-% erhalten werden kann.

6. Verfahren gemäß einem der Ansprüche 1 bis 5, dadurch gekennzeichnet, daß ein Isocyanat, welches im wesentlichen aus H6XDI-Monomer eventuell zusammen mit H6XDI-Derivaten wie Trimeren, insbesondere Isocyanurat- oder Biurettrimeren, Präpolymeren und/oder Carbodiimid-/Urethidionderivaten besteht, in solchen Verhältnissen verwendet wird, daß ein NCO-Wert zwischen 15 und 43 Gew.-% erhalten werden kann.

7. Verfahren gemäß einem der Ansprüche 1 bis 6, dadurch gekennzeichnet, daß ein Isocyanat, welches im wesentlichen aus H12XDI-Monomer eventuell zusammen mit H12XDI-Derivaten wie Trimeren, insbesondere Isocyanurat- oder Biurettrimeren, Präpolymeren und/oder Carbodiimid-/Urethidionderivaten besteht, in solchen Verhältnissen verwendet wird, daß ein NCO-Wert zwischen 15 und 31,8 Gew.-% erhalten werden kann.

8. Verfahren gemäß einem der Ansprüche 3 bis 7, dadurch gekennzeichnet, daß Präpolymere eingesetzt werden, die auf Polyetherpolyolen, Kettenverlängeren und/oder Quervernetzungsmitteln basieren, welche als funktionelle Gruppen nur OH-Gruppen (primäre und/oder sekundäre), eine Funktionalität zwischen 2 und 6 und eine Hydroxylzahl von 15 bis 1800 aufweisen.

9. Verfahren gemäß einem der Ansprüche 1 bis 8, dadurch gekennzeichnet, daß eine aktiven Wasserstoff enthaltende Verbindung eingesetzt wird, welche hauptsächlich aus über Polyaddition von Propylenoxid und/oder Ethylenoxid auf Initiatoren niedrigen Molekulargewichts gebildeten Polyetheralkoholen besteht.

10. Verfahren gemäß einem der Ansprüche 1 bis 9, dadurch gekennzeichnet, daß eine aktiven Wasserstoff enthaltende Verbindung eingesetzt wird, welche aus Esterkondensationsprodukten von Dicarbonsäuren mit Polyalkoholen niedrigen Molekulargewichts bestehende Polyesteralkohole mit einer Funktionalität von 2 bis 4 umfaßt.

11. Verfahren gemäß einem der Ansprüche 1 bis 10, dadurch gekennzeichnet, daß eine aktiven Wasserstoff enthaltende Verbindung eingesetzt wird, welche hauptsächlich aus Polytetramethylenetherglycolen (PTMG) besteht.

12. Verfahren gemäß einem der Ansprüche 1 bis 11, dadurch gekennzeichnet, daß eine aktiven Wasserstoff enthaltende Verbindung eingesetzt wird, welche hauptsächlich aus Polyetherpolyolen mit einer Funktionalität von 2 bis 3, einer Hydroxylzahl von 15 bis 200 besteht, die gegebenenfalls mit polymerisierten organischen Füllstffen wie mit Styrol/Acrylnitril gepfropften Polyolen, PHD-Polyolen und PIPA-Polyolen modifiziert sein können, wobei der Füllstoffgehalt von 0 bis 50 Gew.-% schwanken kann.

13. Verfahren gemäß einem der Ansprüche 1 bis 12, dadurch gekennzeichnet, daß eine aktiven Wasserstoff enthaltende Verbindung eingesetzt wird, die im wesentlichen aus Polyolen mit mindestens 70 % primären OH-Gruppen besteht.

**14.** Verfahren gemäß einem der Ansprüche 1 bis 13, dadurch gekennzeichnet, daß Kettenverlängerer und/oder Quervernetzungsmittel eingesetzt werden, die hauptsächlich aus mindestens einer der folgenden Substanzen bestehen:
Ethylenglykol, Propandiol, Triethanolamin, Butandiol, Pentandiol, Hexandiol, Glycerin, Trimethylpropan, Trimethylolethan, Pentaerythrit, Bisphenol A und Cyclohexandimethanol sowie Ethylenoxidadditionsprodukte dieser Substanzen mit weniger als 5 Mol Ethylenoxid pro Mol der Substanz.

**15.** Verfahren gemäß einer der Ansprüche 1 bis 14, dadurch gekennzeichnet, daß ein katalytisches System bestehend aus mindestens zwei Komponenten verwendet wird, welche der Amininitiator und mindestens eine der folgenden Metallverbindungen sind:
(a) organische Blei- und/oder Wismutkatalysatoren, insbesondere Salze organischer Säuren wie Octan- und Naphthensäuresalze oder
(b) Sn-(IV)-carboxylate der Formel (A):

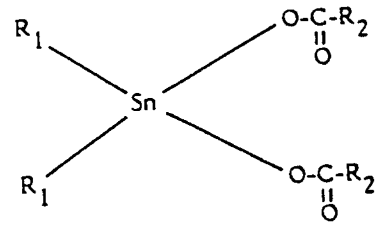

in der $R_1$ eine Methylgruppe und $R_2$ ein $(C_{1-12})$-Alkylradikal oder Naphthensäureradikal darstellt, wobei die Alkylradikale linear oder verzweigt sein können, oder
(c) Dialkyldistannoxandicarboxylate der allgemeinen Formel (B):

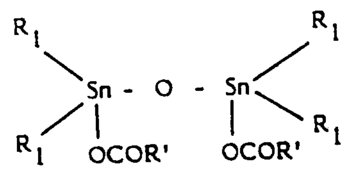

in der $R_1$ ein $(C_{1-4})$-Alkylradikal und $R_2$ ein lineares oder verzweigtes $(C_{1-12})$-Alkylradikal darstellt, oder
(d) Alkylzinnhalogenide der allgemeinen Formel

$(R_1)_xSn(Hal)_y$,

in der $R_1$ ein $(C_{1-4})$-Alkylradikal bedeutet, "Hal" Chlor oder Brom darstellt, $x + y = 4$ ist und x oder y von 1 bis 3 variieren.

**16.** Verfahren gemäß einem der Ansprüche 1 bis 15, dadurch gekennzeichnet, daß ein mindestens eine der folgenden Verbindungen umfassender Amininitiator eingesetzt wird:
Monoethanolamin, Diethanolamin, Diisopropanolamin, Ethylendiamin, Isophorondiamin, N,N'-Dimethyl-(diethyl)-ethylendiamin, 2-Amino-2-methyl(oder ethyl)-1-propanol, 2-Amino-1-butanol, 3-Amino-1,2-propandiol, 2-Amino-2-methyl(ethyl)-1,3-propandiol, "JEFFAMINE" (Texaco)(Propylenoxid-Additionsprodukte mit hauptsächlich endständigen primären $NH_2$- oder sek. NH-Gruppen, einer Funktionalität von 2 bis 3 und einem Äquivalentgewicht < 200)

**17.** Verfahren gemäß einem der Ansprüche 1 bis 16, dadurch gekennzeichnet, daß ein katalytisches System eingesetzt wird, welches mindestens einen Amininitiator zusammen mit einer organischen Blei-, Zinn- oder Wismutverbindung und
(a) einem Katalysator vom Zeolithtyp, gebildet aus einem alkalischen Aluminiumsilikat mit Natrium- und/oder Kaliumionen, und/oder

(b) einem alkalischen Katalysatior mit einem pH oberhalb von 10, welcher aus Diazobicycloalkenen oder deren Salzen mit schwachen organischen Säuren oder aus Kalium-, Natrium- oder Lithiumsalzen schwacher organischer Säuren besteht.

**18.** Verfahren gemäß einem der Ansprüche 1 bis 17, dadurch gekennzeichnet, daß dem Reaktionsgemisch ein internes Trennmittel zugesetzt wird, welches vorzugsweise aus einem Polydimethylsiloxanpolyether-Copolymer mit weniger als 20 Gew.-% Polyether, bezogen auf das gesamte Molekül, und weniger als 50 Gew.-% Ethylenoxid, bezogen auf die Gesamtmenge an Ethylenoxid und Propylenoxid in der Polyetherkette, wobei die Konzentration des Trennmittels zwischen 0 und 5 Gew.-% variiert, bezogen auf die Gesamtmenge an Polyurethanpolymer.

**19.** Verfahren gemäß einem der Ansprüche 1 bis 18, dadurch gekennzeichnet, daß ein thixotropes Verdickungsmittel eingesetzt wird, welches vorzugsweise aus hochdispersem, koaguliertem Siliziumdioxid in Konzentrationen von 0 bis 3 Gew.-% besteht, bezogen auf die gesamte Polyurethanmenge.

**20.** Verfahren gemäß einem der vorstehenden Ansprüche, dadurch gekennzeichnet, daß das Reaktionsgemisch entsprechend einem Zweikomponentensystem aufgesprüht wird, bei dem eine Komponente das Isocyanat und alle in bezug auf das Isocyanat eine ausreichende Zeit stabilen und mit letzterem kompatiblen Additive umfaßt und bei dem die andere Komponente die bezüglich der NCO-Reste aktiven Wasserstoff enthaltenden Verbindungen, insbesondere Polyole, Kettenverlängerer und Quervernetzungsmittel, und alle in bezug auf diese Verbindungen für eine ausreichende Zeit stabilen und mit letzteren kompatiblen Additive umfaßt.

**21.** Verfahren gemäß Anspruch 20, dadurch gekennzeichnet, daß die Komponenten vor dem Sprühen auf eine Temperatur von nicht über 120 °C und vorzugsweise zwischen 30 und 70 °C vorgewärmt werden.

**22.** Verfahren gemäß Anspruch 20 oder 21, dadurch gekennzeichnet, daß die Temperatur des Polyurethan-Reaktionsgemisches während des Sprühens solchermaßen eingestellt wird, daß seine Viskosität nicht höher als 700 cps ist.

**23.** Verfahren gemäß einem der Ansprüche 20 bis 22, dadurch gekennzeichnet, daß die Oberfläche der offenen Form, auf die das Polyurethan aufgesprüht wird, bei einer Temperatur von 50 bis 80 °C gehalten wird.

**24.** Verfahren gemäß einem der Ansprüche 20 bis 23, dadurch gekennzeichnet, daß die Dichte des aufgesprühten Polyurethanfilms durch Einstellung der Menge an Treibmittel und in dem Rohmaterial dispergierter Luft auf 500 bis 1200 kg/m$^3$ eingestellt wird.

**25.** Verfahren gemäß einem der Ansprüche 20 bis 24, dadurch gekennzeichnet, daß ein im wesentlichen porenfreier Polyurethanfilm mit einer Dichte von 900 bis 1200 kg/m$^3$ durch Entgasen und Entwässern vor dem Sprühen mindestens der Komponente, welche die aktiven Wasserstoff enthaltende Verbindung umfaßt, gebildet wird.

**26.** Verfahren gemäß einem der Ansprüche 20 bis 25, dadurch gekennzeichnet, daß die Härte des gesprühten Polyurethanfilms auf einen Wert zwischen Shore A 20 und Shore D 80 eingestellt wird, in dem man den Typ und die Menge an Isocyanat, der aktiven Wasserstoff enthaltenden Verbindung, des Kettenverlängerers und/oder des Quervernetzungsmittels auswählt.

## Revendications

**1.** Procédé de fabrication d'un film de polyuréthanne stable à la lumière comprenant les étapes suivantes :

- La préparation d'un mélange de réaction de polyuréthanne contenant un composé d'isocyanate comportant au moins deux groupes NCO qui ne sont pas directement attachés à un groupe aromatique, et un composé contenant des hydrogènes actifs par rapport aux groupes NCO, et dans lequel on fait réagir ce dernier composé avec le composé d'isocyanate en présence d'un allongeur de chaîne et/ou d'un agent de réticulation et d'un catalyseur; et

- la pulvérisation du mélange réactionnel susdit au moyen d'un pistolet de pulvérisation sur une surface de manière à former le film de polyuréthanne précité par au moins un passage du pistolet de pulvérisation sur ladite surface,

caractérisé en ce que, afin de permettre la pulvérisation du mélange réactionnel en une épaisseur homogène de 0,3 à 3 mm par passage du pistolet de pulvérisation sur une surface de moule ouvert et de permettre le démoulage du film de polyuréthanne ainsi obtenu après un temps de démoulage ("TD") de moins de 10 minutes, (a) utilisation est faite d'un composé contenant des hydrogènes actifs, différent d'un polyol de caprolactone, dans lequel les groupes fonctionnels se composent pour au moins 50 % d'un groupe $CH_2OH$, NH et/ou $NH_2$ actif, dont la fonctionnalité varie de 2 à 8 et dont le poids équivalent est compris entre 100 et 3.500, en même temps que de 2 à 300 parties, pour 100 parties dudit composé, d'un allongeur de chaîne et/ou d'un agent de réticulation, dont les groupes fonctionnels sont des groupes OH, dont au moins 50 % sont des groupes OH primaires, dont le poids équivalent est inférieur à 100 et dont la fonctionnalité varie de 2 à 6, ainsi qu'avec un système catalytique qui comprend au moins un composé de plomb, de bismuth et/ou d'étain (IV) organique et au moins un initiateur d'amine, ayant une fonctionnalité de 2 à 6, un poids équivalent inférieur ou égal à 200, et au moins un groupe $NH_2$ ou NH aliphatique ou alicyclique; et (b) le mélange de réaction est préchauffé à une température ne dépassant pas 120 °C de telle sorte que sa viscosité soit située entre 500 et 1200 cps lors de la pulvérisation et la surface de moule ouvert est préchauffée à une température se situant entre 30 et 100 °C.

**2.** Procédé suivant la revendication 1, caractérisé en ce qu'on ajoute tout au plus 0,4 % d'eau et tout au plus 0,04 mole d'un agent de soufflage physique, ayant un point d'ébullition de 20 à 70 °C, par rapport à 100 g du composé contenant des hydrogènes actifs, de l'agent de réticulation, de l'allongeur de chaîne et de l'initiateur précités.

**3.** Procédé suivant l'une ou l'autre des revendications 1 et 2, caractérisé en ce qu'on utilise un isocyanate se composant principalement de monomère d'IPDI et/ou d'un mélange de monomère d'IPDI et de dérivés d'IPDI, tels que des trimères, en particulier des trimères d'isocyanurate ou de biuret, des prépolymères et/ou des dérivés de carbodiimide/uréthidion, dans des rapports qui permettent d'obtenir une valeur NCO de 15 à 37,8 % en poids.

**4.** Procédé suivant l'une quelconque des revendications 1 à 3, caractérisé en ce qu'on utilise un isocyanate se composant principalement de monomère de TMXDI, (avec de l'isomère méta et/ou para), de prépolymères, de trimère de biuret et/ou de dérivés de carbodiimide/uréthidion, dans des rapports qui permettent d'obtenir une valeur de NCO de 15 à 34,4 % en poids.

**5.** Procédé suivant l'une quelconque des revendications 1 à 4, caractérisé en ce que utilisation est faite d'un isocyanate se composant principalement de monomère de HDI éventuellement avec des dérivés de HDI, tels que des trimères, en particulier des trimères d'isocyanurate ou de biuret, des prépolymères et/ou des dérivés de carbodiimide/uréthidion, dans des rapports qui permettent d'obtenir une valeur de NCO de 15 à 50 % en poids.

**6.** Procédé suivant l'une quelconque des revendications 1 à 5, caractérisé en ce qu'on utilise un isocyanate se composant principalement de monomère de H6XDI éventuellement avec des dérivés de H6XDI, tels que des trimères, en particulier des trimères d'isocyanurate ou de biuret, des prépolymères et/ou des dérivés de carbodiimide/uréthidion, dans des rapports qui permettent d'obtenir une valeur de NCO de 15 à 43 % en poids.

**7.** Procédé suivant l'une quelconque des revendications 1 à 6, caractérisé en ce qu'on utilise un isocyanate se composant principalement de monomère de H12MDI éventuellement avec des dérivés de H12MDI, tels que des trimères, en particulier des trimères d'isocyanurate ou de biuret, des prépolymères et/ou des dérivés de carbodiimide/uréthidion, dans des rapports qui permettent d'obtenir une valeur de NCO de 15 à 31,8 % en poids.

**8.** Procédé suivant l'une quelconque des revendications 3 à 7, caractérisé en ce qu'on utilise des prépolymères à base de polyéthers-polyols, des allongeurs de chaîne et/ou des agents de réticulation ayant comme groupes fonctionnels uniquement des OH (primaires et/ou secondaires), une fonctionnalité de 2 à 6 et un indice d'hydroxyle de 15 à 1.800.

**9.** Procédé suivant l'une quelconque des revendications 1 à 8, caractérisé en ce que utilisation est faite d'un composé contenant des hydrogènes actifs, se composant principalement de polyéthers-alcools qui sont formés par la polyaddition d'oxyde de propylène et/ou d'oxyde d'éthylène sur des initiateurs de bas poids moléculaire.

**10.** Procédé suivant l'une quelconque des revendications 1 à 9, caractérisé en ce que utilisation est faite d'un composé contenant des hydrogènes actifs qui comprend des polyesters-alcools formés des produits de condensation d'esters d'acides dicarboxyliques avec des alcools polyatomiques de bas poids moléculaire ayant une fonctionnalité de 2 à 4.

**11.** Procédé suivant l'une quelconque des revendications 1 à 10, caractérisé en ce que utilisation est faite d'un composé contenant des hydrogènes actifs se composant principalement de polytétraméthylène éther glycols (PTMG).

**12.** Procédé suivant l'une quelconque des revendications 1 à 11, caractérisé en ce que utilisation est faite d'un composé contenant des hydrogènes actifs se composant principalement de polyéthers-polyols ayant une fonctionnalité de 2 à 3, un indice d'hydroxyle de 15 à 200, et qui sont éventuellement modifiés par des charges organiques polymérisées, tels que des polyols greffés avec du styrène/acrylonitrile, des polyols de PHD et des polyols de PIPA, dont la teneur en charge varie de 0 à 50 % en poids.

**13.** Procédé suivant l'une quelconque des revendications 1 à 12, caractérisé en ce que utilisation est faite d'un composé contenant des hydrogènes actifs se composant principalement de polyols comportant au moins 70 % de groupes OH primaires.

**14.** Procédé suivant l'une quelconque des revendications 1 à 13, caractérisé en ce que utilisation est faite d'un allongeur de chaîne et/ou d'un agent de réticulation se composant principalement d'au moins une des substances suivantes : éthylène glycol, propanediol, triéthanolamine, butanediol, pentanediol, hexanediol, glycérine, triméthylpropane, triméthyloléthane, pentaérythritol, bisphénol A, cyclohexanediméthanol et les produits d'addition d'oxyde d'éthylène de ces substances avec moins de 5 moles d'oxyde d'éthylène par mole desdites substances.

**15.** Procédé suivant l'une quelconque des revendications 1 à 14, caractérisé en ce que utilisation est faite d'un système catalytique se composant au moins de deux éléments constitués par l'initiateur d'amine précité et par au moins un des composés métalliques suivants : (a) les catalyseurs à base de plomb et/ou de bismuth organiques, en particulier des sels d'acides organiques, tels que les sels d'octoate et de naphténate, ou (b) les carboxylates de Sn (IV) ayant la formule générale (A) :

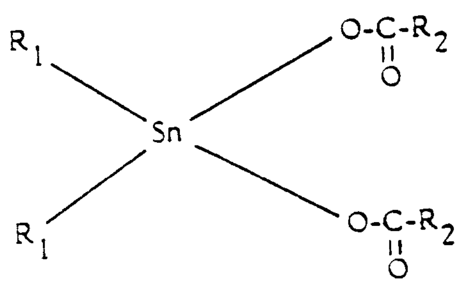

dans laquelle $R_1$ représente un groupe méthyle et $R_2$ forme un radical alkyle ($C_1$-$C_{12}$) ou un radical d'acide naphténique, les radicaux alkyle étant linéaires ou ramifiés, ou (c) les dicarboxylates de dialkyldistannoxane ayant la formule générale (B) :

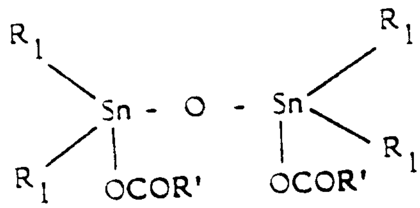

dans laquelle $R_1$ représente un radical alkyle ($C_1$-$C_4$) et R' un radical alkyle ($C_1$-$C_{12}$), ramifié ou non ou (d) les halogénures d'alkylétain ayant la formule générale $(R_1)_xSn(Hal)_y$, dans laquelle $R_1$ représente un radical alkyle ($C_1$-$C_4$) et "(Hal)" un atome de chlore ou de brome, $x + y = 4$ et x ou y varie de 1 à 3.

**16.** Procédé suivant l'une quelconque des revendications 1 à 15, caractérisé en ce que utilisation est faite d'un initiateur d'amine comprenant au moins un des composés suivants : monoéthanolamine, diéthanolamine, diisopropanolamine, éthylènediamine, isophoronediamine, N,N'-diméthyl(diéthyl)-éthylènediamine, 2-amino-2-méthyl(ou éthyl)-1-propanol, 2-amino-1-butanol, 3-amino-1,2-propanediol, 2-amino-2-méthyl(éthyl)-1,3-propanediol, "Jeffamines" (Texaco) (produits d'addition d'oxyde de propylène comprenant principalement des groupes terminaux $NH_2$ primaires ou NH secondaires - fonctionnalité de 2 à 3 - poids équivalent < 200).

**17.** Procédé suivant l'une quelconque des revendications 1 à 16, caractérisé en ce que utilisation est faite d'un système catalytique comprenant au moins un initiateur d'amine avec un composé de plomb, d'étain ou de bismuth organique et (a) un catalyseur du type zéolite formé d'un silicate d'aluminium alcalin avec des ions sodium et/ou potassium et/ou (b) un catalyseur alcalin ayant un pH supérieur à 10 et se composant de diazabicycloalkènes ou de sels de ces derniers avec des acides organiques faibles ou se composant de sels de potassium, de sodium ou de lithium avec des acides organiques faibles.

**18.** Procédé suivant l'une quelconque des revendications 1 à 17, caractérisé en ce qu'on ajoute un agent de démoulage intérieur au mélange de réaction, se composant avantageusement d'un copolymère de polydiméthylsiloxane-polyéther ayant moins de 20 % en poids de polyéther par rapport à la molécule totale et moins de 50 % en poids d'oxyde d'éthylène par rapport à la somme de l'oxyde d'éthylène et de l'oxyde de propylène dans la chaîne de polyéther, la concentration de cet agent de démoulage variant entre 0 et 5 % en poids par rapport à la quantité totale de polymère de polyuréthanne.

**19.** Procédé suivant l'une quelconque des revendications 1 à 18, caractérisé en ce que utilisation est faite d'un agent épaississant thixotropique se composant avantageusement de dioxyde de silicium coagulé fumé à une concentration se situant entre 0 et 3 % en poids par rapport à la quantité totale de polyuréthanne.

**20.** Procédé suivant l'une quelconque des revendications précédentes, caractérisé en ce que le mélange de réaction de polyuréthanne est pulvérisé suivant un système à deux composants, dans lequel un composant comprend l'isocyanate et tous les additifs qui sont par rapport à cet isocyanate pendant une période de temps suffisante stables et compatibles avec ce dernier et dans lequel l'autre composant comprend les composés contenant des hydrogènes actifs par rapport aux groupes NCO, en particulier des polyols, des allongeurs de chaîne et des agents de réticulation, et des additifs qui sont par rapport à ces composés pendant une période de temps suffisante stables et compatibles avec des derniers.

**21.** Procédé suivant la revendication 20, caractérisé en ce que les composants sont préchauffés jusqu'à une température ne dépassant pas 120 °C et avantageusement entre 30 et 70 °C, avant la pulvérisation.

**22.** Procédé suivant l'une ou l'autre des revendications 20 et 21, caractérisé en ce que la température du mélange de réaction de polyuréthanne est ajustée lors de la pulvérisation d'une manière telle que la viscosité de celui-ci ne soit pas supérieure à 700 cps.

**23.** Procédé suivant l'une quelconque des revendications 20 à 22, caractérisé en ce que la surface du moule ouvert, sur laquelle le polyuréthanne est pulvérisé, est maintenue à une température de 50 à

80 °C.

**24.** Procédé suivant l'une quelconque des revendications 20 à 23, caractérisé en ce que la densité du film de polyuréthanne pulvérisé est ajustée entre 500 et 1200 kg/$m^3$ en adaptant la quantité d'agent de soufflage et d'air dispersé dans les matières premières.

**25.** Procédé suivant l'une quelconque des revendications 20 à 24, caractérisé en ce qu'un film de polyuréthanne, essentiellement exempt de pores et ayant une densité de 900 à 1200 kg/$m^3$, est formé par dégazage et déshydratation avant la pulvérisation, d'au moins le composant comprenant le composé contenant des hydrogènes actifs.

**26.** Procédé suivant l'une quelconque des revendications 20 à 25, caractérisé en ce que la dureté du film de polyuréthanne pulvérisé est ajustée entre shore A 20 et shore D 80 en choisissant le type et la quantité de l'isocyanate, du composé contenant des hydrogènes actifs, de l'allongeur de chaîne et/ou de l'agent de réticulation.